# EUROPÄISCHE PATENTSCHRIFT

(11) **EP 0 400 677 B1**
(45) Veröffentlichungstag und Bekanntmachung des Hinweises auf die Patenterteilung: **24.11.1993**
(21) Anmeldenummer: 90110495.0
(22) Anmeldetag: 01.06.1990
(51) Int. Cl.: B60D 1/02

(54) **Anhängerkupplung Stichwort: Spielausschaltungssteuerung durch Aufwerfhebel**
Trailer coupling comprising a device for taking up play controlled by a locking lever
Attelage de remorque comportant un dispositif de rattrapage de jeu commandé par un levier de verrouillage

(30) Priorität: 01.06.1989 DE 3917918
(43) Veröffentlichungstag der Anmeldung: 05.12.1990
(73) Patentinhaber: ROCKINGER Spezialfabrik für Anhängerkupplungen GmbH & Co., D-80904 München (DE)
(72) Erfinder: Glässner, Ralf, D-8000 München 50 (DE); Breu, Johann, D-8000 München 71 (DE); Schnabl, Paul, D-8000 München 45 (DE)
(74) Vertreter: Weickmann, Heinrich, Dipl.-Ing.

(56) Entgegenhaltungen:
- EP-A- 0 149 453
- DE-A- 2 458 948
- DE-A- 2 458 977
- DE-C- 2 912 277

## Beschreibung

Die Erfindung betrifft eine Anhängerkupplung, umfassend einen Kupplungskörper, einen in dem Kupplungskörper zwischen einer Kupplungsstellung und einer Nicht-Kupplungsstellung verschiebbar geführten Kupplungsbolzen, einen um eine Aufwerfhebelschwenkachse zwischen einer Sicherungsstellung und einer Haltestellung schwenkbar gelagerten Aufwerfhebel, welcher in eine Ausnehmung des Kupplungsbolzens eingreift, in einer Sicherungsstellung den Kupplungsbolzen in dessen Kupplungsstellung sichert, bei seinem Übergang von der Sicherungsstellung in eine Haltestellung den Kupplungsbolzen aus der Kupplungsstellung in die Nicht-Kupplungsstellung mitnimmt und in der Haltestellung den Kupplungsbolzen in der Nicht-Kupplungsstellung hält, einen zusätzlichen senkrecht zur Achse des Kupplungsbolzens vorzugsweise annähernd in Richtung der Aufwerfhebelschwenkachse verschiebbaren Sicherungsbolzen, welcher in einer Sicherungsstellung einer aufwärts gerichteten Anschlagfläche des Kupplungsbolzens gegenübersteht und den Kupplungsbolzen in seiner Kupplungsstellung sichert und einen Ausrücknocken zum Ausrücken des zusätzlichen Sicherungsbolzens aus seiner Sicherungsstellung, welcher Ausrücknocken mit dem Aufwerfhebel zur gemeinsamen Drehung verbunden ist und den zusätzlichen Sicherungsbolzen wenigstens teilweise aus seiner Sicherungsstellung drückt, bevor der durch den Aufwerfhebel in Richtung auf die Nicht-Kupplungsstellung mitgenommene Kupplungsbolzen mit dem Sicherungsbolzen diesen gegebenenfalls noch weiter zurückdrängend in Eingriff tritt, wobei der Aufwerfhebel bei seinem Übergang von der Sicherungsstellung in Richtung Haltestellung einen die Sicherungsfunktion des Aufwerfhebels aufhebenden endlichen Weg durchläuft, bevor er in Mitnahmeeingriff mit dem Kupplungsbolzen tritt.

Eine solche Anhängerkupplung ist durch offenkundige Vorbenutzung einer Rockinger-Kupplung Type 59 U 140 entsprechend einem Prospekt Rockinger JF 6/87 I B1. 800/6 und ferner durch die europäische Patentschrift 149 453 bekannt.

Aus der DE-AS 25 02 944 ist es ferner bekannt, Kupplungen mit einer Spielunterdrückungsvorrichtung auszurüsten, welche auf die jeweils von dem Kupplungsbolzen durchsetzte Zugöse einwirkt und damit das Spiel zwischen der Zugöse und dem Kupplungsbolzen für den Fahrbetrieb wenigstens teilweise unterdrückt.

Solange diese Spielunterdrückungsvorrichtung wirksam ist, ist es schwierig, manchmal sogar unmöglich, den Kupplungsbolzen aus seiner Kupplungsstellung in seine Nicht-Kuppungsstellung zu überführen, weil der Kupplungsbolzen durch die Spielunterdrückungsvorrichtung mit seiner Führung verspannt sein kann, so dass er hoher Reibung in seiner Führung unterliegt. Es kann weiterhin die Situation eintreten, dass auch die Sicherung durch etwaige Vertikalkräfte, welche von der Spielunterdrückungsvorrichtung auf den Kupplungsbolzen ausgeübt werden, verspannt ist, so dass es auch schwierig ist, die Sicherung zu lösen.

Der vorliegenden Erfindung liegt die Aufgabe zugrunde, bei einer Anhängerkupplung der eingangs bezeichneten Art eine zwangsläufige Wirkungsaufhebung der Spielunterdrückungsvorrichtung zu ermöglichen, die verhindert, dass der Kupplungsbolzen und gegebenenfalls auch die Sicherungsmittel bei Einleitung der jeweiligen Bewegung Zwangskräften durch die Spielunterdrückungsvorrichtung unterliegt.

Zur Lösung dieser Aufgabe wird erfindungsgemäss vorgeschlagen, dass bei Vorhandensein einer Spielunterdrückungsvorrichtung, welche auf die jeweils von dem Kupplungsbolzen durchsetzte Zugöse das Spiel zwischen Kupplungsbolzen und Zugöse wenigstens teilweise unterdrückend einwirkt, diese Spielunterdrückungsvorrichtung durch die Bewegung des Aufwerfhebels oder eines gemeinsam mit dem Aufwerfhebel bewegbaren Teils auslösbar ist, bevor der Aufwerfhebel in Mitnahmeeingriff mit dem Kupplungsbolzen und vorzugsweise auch bevor der Ausrücknocken in Ausrückeingriff mit dem zusätzlichen Sicherungsbolzen tritt und dass in der durch den Aufwerfhebel und durch den Sicherungsbolzen gesicherten Kupplungsstellung des Kupplungsbolzens dieser Kupplungsbolzen bei Einleitung einer Vertikalschiebekraft in Richtung Nicht-Kupplungsstellung vorab an den Sicherungsbolzen anschlägt, bevor er an dem Aufwerfhebel anschlagen könnte.

Es ist ein besonderer Vorteil der erfindungsgemässen Ausführungsform, dass neben den in der Kupplungsmechanik ohnehin notwendigen Bewegungsabläufen keine Vorlaufbewegung, etwa eines Handbetätigungshebels, ausgeführt werden muss, um die Spielunterdrückungsvorrichtung vor Beginn der jeweiligen Bewegungen des Kupplungsbolzens und gegebenenfalls der der Sicherungsmittel unwirksam zu machen. Weitere Merkmale der Erfindung ergeben sich aus den Unteransprüchen.

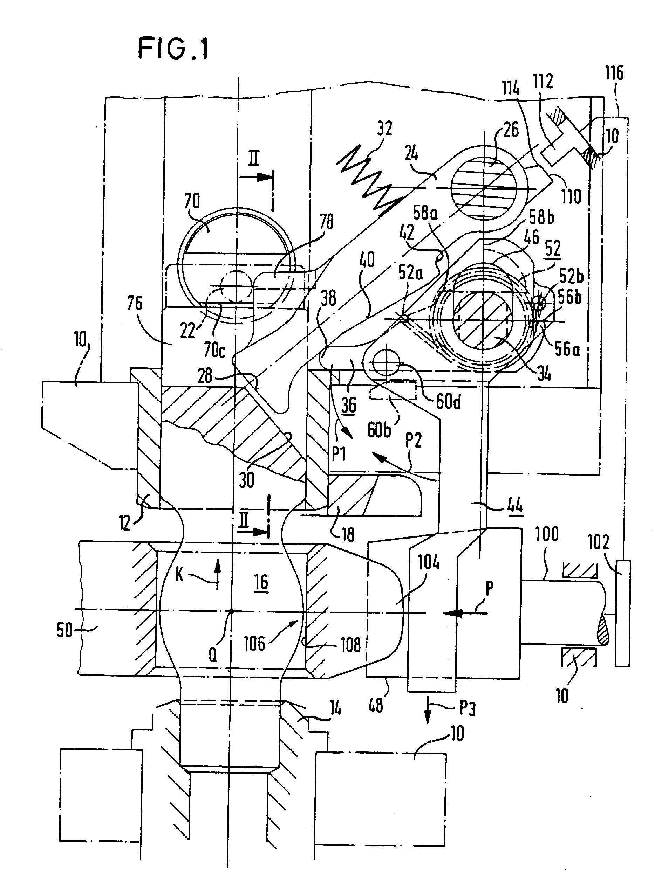

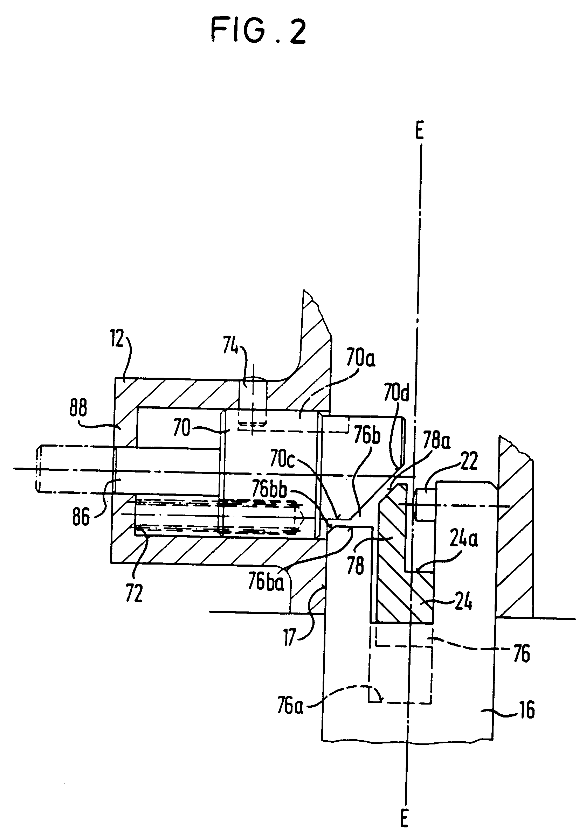

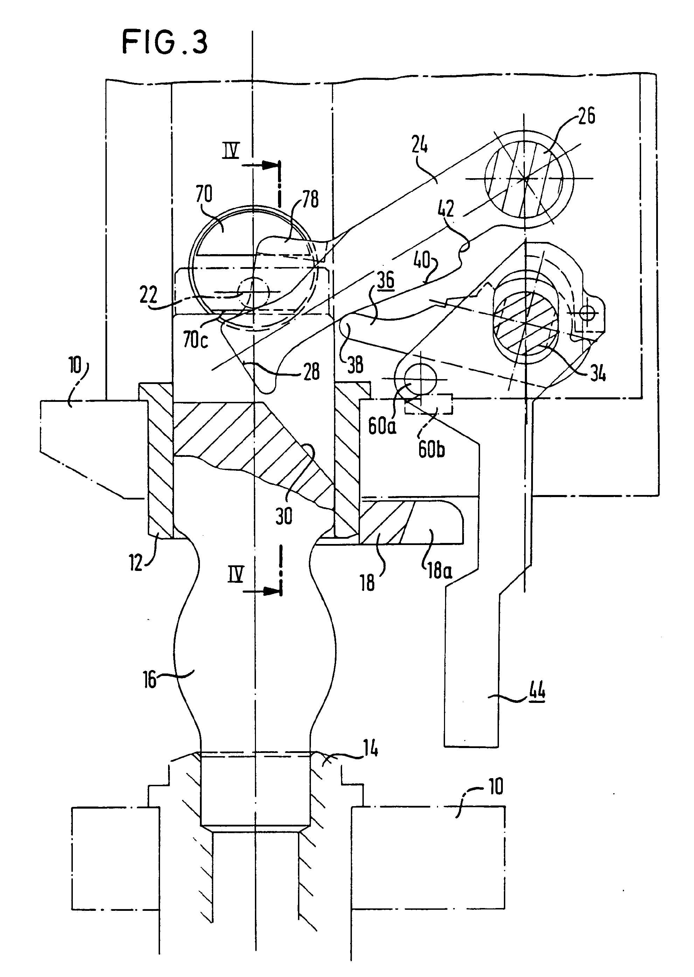

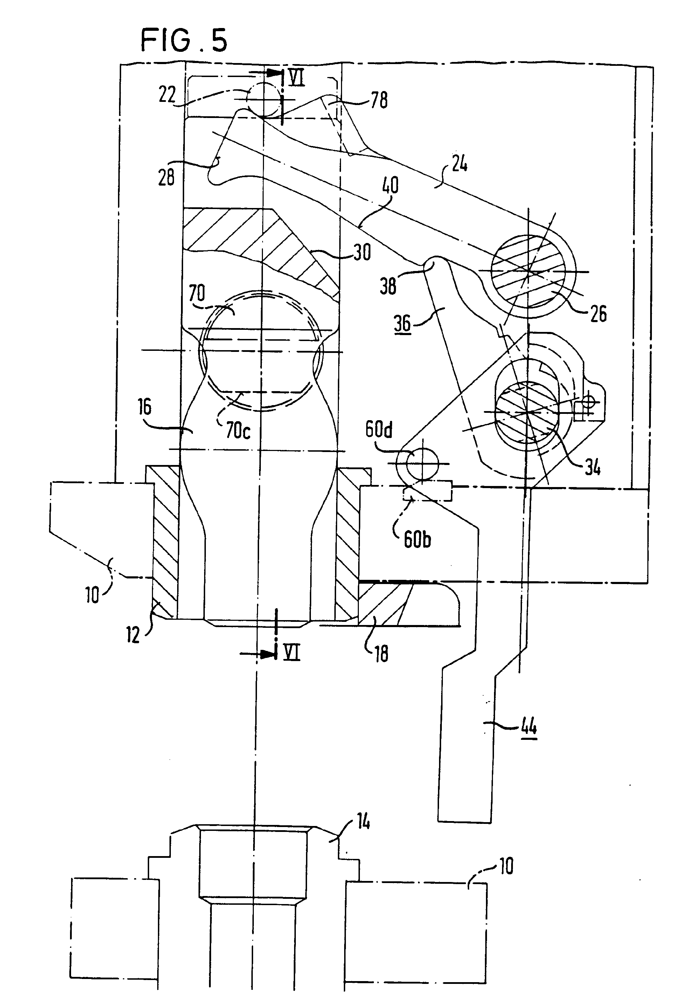

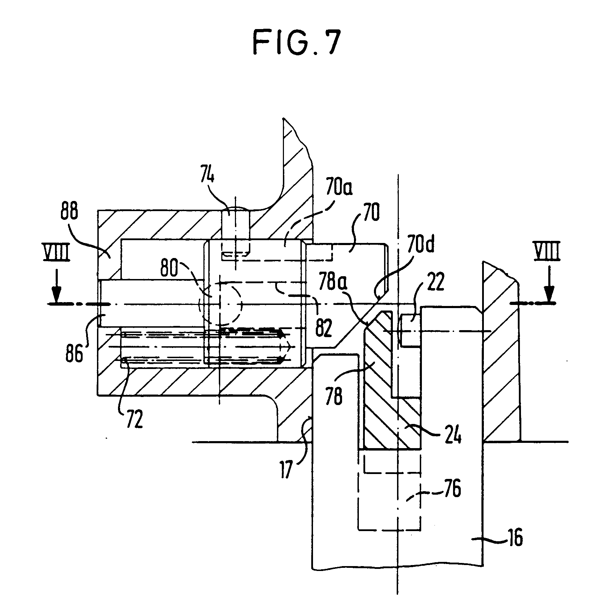

Die beiliegenden Figuren erläutern die Erfindung anhand eines Ausführungsbeispiels. Es stellen dar:
Figur 1
   eine erfindungsgemässe Anhängerkupplung in der Kupplungsstellung, teilweise im Schnitt senkrecht zur Aufwerfhebelschwenkachse;
Figur 2
   einen Schnitt nach Linie II-II der Figur 1;
Figur 3
   einen Schnitt entsprechend demjenigen der Figur 1 in einer Zwischenstellung während des Übergangs des Aufwerfhebels aus seiner Sicherungsstellung in seine Haltestellung;
Figur 4
   einen Schnitt nach Linie IV-IV der Figur 3;
Figur 5
   einen Schnitt entsprechend demjenigen der Figuren 1 und 3 in der Nicht-Kupplungsstellung des Kupplungsbolzens;
Figur 6
   einen Schnitt nach Linie VI-VI der Figur 5;
Figur 7
   einen Schnitt entsprechend demjenigen der Figur 2 mit einem Positionsfühler für den zusätzlichen Sicherungsbolzen und
Figur 8
   einen Schnitt nach Linie VIII-VIII der Figur 7.

In Figur 1 ist der Kupplungskörper mit 10 bezeichnet. Dieser Kupplungskörper 10 weist Führungsbuchsen 12 und 14 für einen Kupplungsbolzen 16 auf. Der Kupplungskörper 10 trägt das Kupplungsmaul, von dem lediglich der obere Lappen 18 eingezeichnet ist. Der Kupplungsbolzen 16 befindet sich in Figur 1 in der Kupplungsstellung. Am oberen Ende ist der Kupplungsbolzen 16 mit einem Schlitz 76 versehen, der von einem Anhebebolzen 22 überbrückt ist. In den Schlitz 76 greift ein Aufwerfhebel 24 ein, der auf einer im Kupplungskörper angeordneten Aufwerfhebelschwenkachse 26 drehbar gelagert ist. Der Aufwerfhebel 24 steht mit seinem freien Ende 28 einer Abschrägung 30 des Schlitzbodens gegenüber, so dass der Kupplungsbolzen 16 in der gezeichneten Kupplungsstellung durch den Aufwerfhebel 24 gesichert ist. Der Aufwerfhebel 24 ist in seine in Figur 1 dargestellte Sicherungsstellung durch eine schematisch angedeutete erste Feder 32 vorgespannt.

In dem Kupplungskörper ist ferner eine Betätigungswelle 34 drehbar gelagert, die mit einem Handbetätigungshebel oder einem Kraftgerät in Antriebsverbindung steht. Auf dieser Betätigungswelle 34 sitzt unverdrehbar ein Abstützhebel 36, der eine Mitnahme- und Abstützspitze 38 aufweist. Die Mitnahme- und Abstützspitze 38 liegt an einer Mitnahmekante 40 des Aufwerfhebels 24 an und kann in eine Stützrast 42 des Aufwerfhebels 24 einrasten.

Auf der Betätigungswelle 34 ist ein Auslösehebel 44 mittels eines Langlochs 46 verschiebbar und schwenkbar gelagert. Das untere Ende des Auslösehebels 44 ist zwischen zwei Andrückbacken 48 für eine Zugöse 50 angeordnet und steht der Zugöse 50 an deren in dem Kupplungskörper einfahrenden Ende gegenüber. Eine um die Betätigungswelle 34 oder eine Nabe des Abstützhebels 36 gewickelte und gegenüber der Betätigungswelle 34 verdrehbare Drehfeder 52 stützt sich mit ihrem einen Ende 52a an dem Abstützhebel 36 ab und greift mit ihrem anderen Ende 52b an dem Auslösehebel 44 an. Diese Drehfeder versucht den Abstützhebel 36 und den Auslösehebel 44 einander im Sinne der Drehpfeile P1,P2 anzunähern. Ausserdem versucht sie, den Auslösehebel 44 mit seinem Langloch 46 gegenüber der Betätigungswelle 34 in Richtung des Verschiebepfeils P3 nach unten zu verschieben. In Figur 1 liegt die Mitnahme- und Abstützspitze 38 des Abstützhebels 36 auf der Buchse 12 auf und der Aufwerfhebel 24 liegt mit seiner Mitnahmekante 40 auf der Mitnahme- und Abstützspitze 38 auf. Der Auslösehebel 44 ist in der in Figur 1 gezeichneten Dreh- und Schiebestellung entgegen der Wirkung der Drehfeder 52 dadurch festgehalten, dass ein Mitnahmeanschlag 56a des Abstützhebels 36 an einem Mitnahmeanschlag 56b des Auslösehebels 44 anliegt.

An dem Abstützhebel 36 ist ein Lösemomentübertragungsanschlag 58a angebracht, der mit einem Lösemomentübertragungsanschlag 58b des Auslösehebels 44 zusammenwirken kann.

An dem Abstützhebel 36 ist ferner ein Steueranschlag 60a angebracht, der mit einem Steueranschlag 60b des Kupplungskörpers zusammenwirken kann.

Zur Funktion der soweit beschriebenen Anhängerkupplung wird auf die EP-PS 149 453 verwiesen und zwar insbesondere auf die Figurenbeschreibung Spalte 4, Zeile 36, bis Spalte 6, Zeile 44, in Verbindung mit den Figuren 1 bis 12 der europäischen Patentschrift 149 453.

In den Figuren 1 und 2 erkennt man ferner einen zusätzlichen Sicherungsbolzen 70. Dieser zusätzliche Sicherungsbolzen 70 ist in dem Kupplungskörper 12 in einer Richtung parallel zur Richtung der Aufwerfhebelschwenkachse 26 verschiebbar geführt. Eine Schraubendruckfeder 72 spannt den Sicherungsbolzen 70 in die Sicherungsstellung gemäss Figur 2. Zur Verdrehungssicherung und eventuell zur Beschränkung der Verschiebbarkeit des Sicherungsbolzens 70 ist ein Zapfen 74 vorgesehen, der in eine Längsnut 70a des Sicherungsbolzens eingreift.

Der Kupplungsbolzen 16 weist an seinem oberen Ende den gestuften Schlitz 76 auf mit einer ersten tieferen Schlitzstufe 76a und einer zweiten weniger tiefen Schlitzstufe 76b. Die zweite Schlitzstufe 76b ist, wie aus Figur 2 zu ersehen, nach der Seite offen. Die erste tiefere Schlitzstufe 76a liegt zentrisch zu der vertikalen, die Achse des Kupplungsbolzens 16 enthaltenden und zur Aufwerfhebelschwenkachse 26 senkrechten Ebene E-E. Die erste tiefere Schlitzstufe ist ungefähr auf die Hälfte ihrer Breite von dem Mitnahme-und Haltezapfen 22 überbrückt. An dem Aufwerfhebel 24 ist eine Mitnahme- und Haltefläche 24a angebracht, die zum Zusammenwirken mit dem Mitnahme- und Haltezapfen 22 bestimmt ist.

In demjenigen Teil der ersten Schlitzstufe 76a, die nicht von dem Mitnahme- und Haltezapfen 22 überbrückt ist, ist auf dem Aufwerfhebel 24 eine Überhöhung 78 angebracht, die einen Ausrücknocken für den zusätzlichen Sicherungsbolzen 70 bildet. Die Überhöhung 78 ist zu diesem Zwecke mit einer Nockenfläche 78a ausgeführt, welche einer Schrägfläche 70d des Sicherungsbolzens 70 gegenübersteht. Der Schlitzgrund 76ba der zweiten Schlitzstufe 76b steht der Unterkante 70c des zusätzlichen Sicherungsbolzens 70, wie aus Figur 2 ersichtlich, gegenüber, wenn der Kupplungsbolzen sich in der Kupplungsstellung gemäss Figur 1 befindet, in der er zum einen durch den Aufwerfhebel 24 und zum anderen durch den Sicherungsbolzen 70 gegen Aufwärtsbewegung gesichert ist. Wenn aus irgendwelchen Gründen der Aufwerfhebel 24 seine Sicherungsfunktion verlieren würde, so könnte der Kupplungsbolzen 16 immer noch nicht nach oben auswandern, weil die von dem Schlitzgrund 76ba gebildete Anschlagfläche gegen die Unterkante 70c des Sicherungsbolzens anschlagen würde.

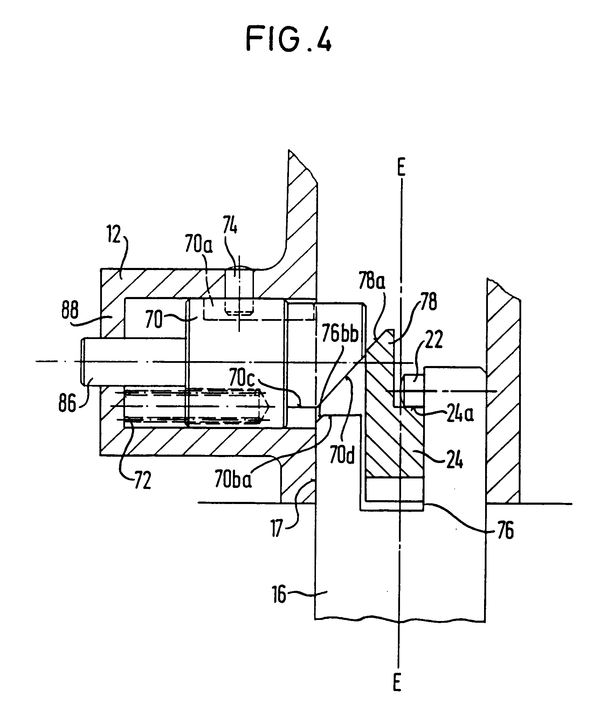

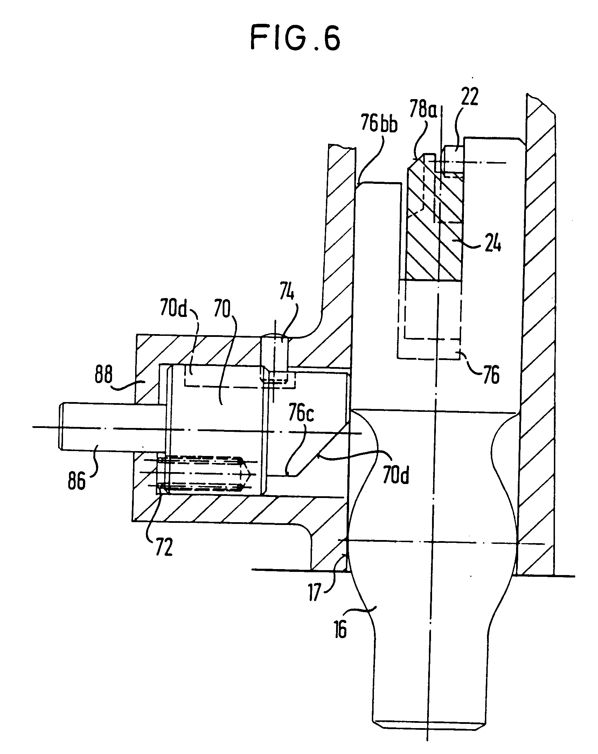

Wenn der Kupplungsbolzen angehoben werden soll, so wird durch Verdrehen der Betätigungswelle 34 und damit des Abstützhebels 36 der Aufwerfhebel 24 in Uhrzeigersinn verschwenkt; dabei wird zunächst die Stellung der Figur 3 erreicht, in welcher der Aufwerfhebel 24 mit einer Mitnahme- und Haltefläche 24a gegen den Mitnahme- und Haltezapfen 22 anschlägt. Bevor allerdings dieser Anschlag zustandekommt, läuft die Nockenfläche 78a gegen die Schrägfläche 70d an, so dass der Sicherungsbolzen, wie in Figur 4 dargestellt, durch das Zusammenwirken der Nockenfläche 78a und der Schrägfläche 70d nach links verschoben wird. In Figur 4 ist die Nockenfläche 78a bereits über die Schrägfläche 70d vollständig hinweggetreten und der Sicherungsbolzen 70 ist so weit nach links verschoben, dass die Übergangsstelle zwischen der Unterkante 70C und der Schrägfläche 70d aus der Führungsbohrung 17 des Kupplungsbolzens 16 zurückgetreten ist. Wenn nun der Aufwerfhebel 24 weiter nach oben verschwenkt wird in Richtung auf die Haltestellung gemäss Figur 5 und dabei der Aufwerfhebel 24 über die Mitnahme- und Haltefläche 24a und den Mitnahme- und Haltezapfen 22 den Kupplungsbolzen 16 mit nach oben nimmt, so läuft eine abgeschrägte Steuerfläche 76bb gegen die Schrägfläche 70d an und der Sicherungsbolzen 70 wird nach Maßgabe der Aufwärtsbewegung des Kupplungsbolzens 16 weiter nach links verschoben in die Stellung gemäss Figur 6.

Zu beachten ist, dass der Kupplungsbolzen 16 mit der Anschlagfläche 76ba unmittelbar gegen den Sicherungsbolzen 70, und zwar dessen Unterkante 70c anfährt und nicht etwa nur durch Vermittlung des Aufwerfhebels 24. Es ist deshalb nicht möglich, dass der Kupplungsbolzen 16 durch die Vermittlung des Aufwerfhebels 24 den zusätzlichen Sicherungsbolzen 70 ausrückt. Insofern kann man von voneinander unabhängigen Sicherungen sprechen, die zum einen von dem Aufwerfhebel 24 gebildet werden (Figur 1) und zum anderen von der Anschlagfläche 76ba im Zusammenwirken mit der Unterkante 70c (Figur 2).

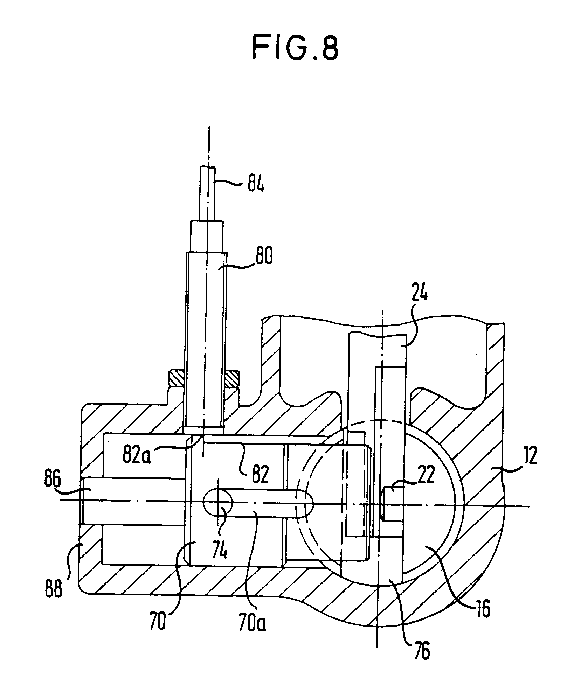

In Figuren 7 und 8 erkennt man einen Positionsfühler 80, welcher durch eine Kante 82 des zusätzlichen Sicherungsbolzens 70 gesteuert ist. In Figuren 7 und 8 befindet sich der zusätzliche Sicherungsbolzen 70 in seiner Sicherungsstellung. Das Vorliegen dieser Sicherungsstellung wird von dem induktiv oder kapazitiv wirkenden Positionsfühler 80 dadurch bemerkt, dass eine Nase 82a der Kante 82 dem Positionsfühler 80 gegenübersteht. Von dem Positionsfühler 80 führt eine Meldeleitung 84 zum Führerhaus und liefert dort einem Signalgeber ein Signal, welches besagt, dass der Kupplungsbolzen sich in Kupplungsstellung befindet und gesichert ist.

An dem zusätzlichen Sicherungsbolzen ist ein Anzeigestift 86 angebracht, welcher eine Wand 88 des Kupplungskörpers 10 durchdringt und mit dieser Wand nur dann bündig ist, wenn der Sicherungsbolzen 70 sich in Sicherungsstellung befindet. Steht er dagegen heraus, so ist die Kupplung noch nicht einwandfrei geschlossen und gesichert. Man kann also aus der Stellung des Anzeigestifts 86 auf den Sicherungszustand der Kupplung schliessen. Der Anzeigestift 86 ist jedenfalls dann erkennbar, wenn sich der Fahrer am Orte der Kupplung aufhält.

In Figur 1 erkennt man, dass die Andrückbacken 48 Teil eines Prismas sind, welches mittels einer Führungsstange 100 in dem Kupplungskörper 10 geführt ist. Die Führungsstange 100 ist von einem fluidenbetätigten, insbesondere pneumatisch betätigten, Kraftgerät 102 beaufschlagt. Dieses Kraftgerät drückt die Andrückbacken 48 gegen die in Fahrtrichtung vordere Endfläche 104 der Zugöse 50 an, so dass das bei 106 angedeutete Spiel zwischen dem Kupplungsbolzen 16 und der Innenumfangsfläche 108 der Zugösenbohrung aufgehoben wird. Dann ist ein Flattern der Zugöse 50 gegenüber dem Kupplungsbolzen 16 während der Fahrt in Geradeausrichtung unterdrückt. Das Kraftgerät 102 kann dabei ein Hilfskraftgerät sein, das lediglich soviel Kraft aufbringt, dass es im Zugbetrieb, bei ohnehin aufgehobenem Spiel 106 die Andrückbacken 48 zur Anlage gegen die Endfläche 104 bringt. Diese Kraft braucht nicht notwendigerweise ausreichen, um die Spielfreiheit bei 106 aufrecht zu erhalten; wie in der DE-AS 25 02 944 beschrieben, kann vielmehr parallel zu dem Kraftgerät 102 noch eine hydraulische Sperre vorhanden sein, welche einen Rückgang der Andrückbacken 48 nach rechts in Figur 1 verhindert, indem beim Vorrücken der Führungsstange 100 nach links ein Hydraulikraum durch ein Rückschlagventil aufgefüllt wird, so dass dann die angesaugte Flüssigkeit einen Rückgang der Führungsstange 100 nach rechts sperrt. Wie auch immer das Kraftgerät 102 im einzelnen aufgebaut ist; wenn die Kupplung gelöst werden soll, so üben die Andrückbacken 48 auf die Zugöse 50 eine Kraft P in der Pfeilrichtung P der Figur 1 aus. Diese Kraft P wird von dem Kupplungsbolzen 16 aufgenommen und führt zu einer Verspannung des Kupplungsbolzens 16 in den Führungen 12 und 14. Je nach Einstellung der Zugöse um die Querachse Q der Figur 1 kann die Kraft P auch eine Vertikalkomponente K in der Pfeilrichtung K der Figur 1 ausüben. Diese Vertikalkomponente K versucht, den Kupplungsbolzen 16 nach oben zu verschieben. Die Abstimmung der von dem Aufwerfhebel 24 einerseits und von dem Sicherungsbolzen 70 andererseits ist nun so gewählt, dass bei Auftreten einer Vertikalkraftkomponente K in der Pfeilrichtung K der Figur 1 der Kupplungsbolzen 16 mit der Fläche 76ba gegen die Unterkante 70c des Sicherungsbolzens 70 anschlägt, bevor die Abschrägung 30 gegen das Ende 28 des Aufwerfhebels 24 anstößt.

Wenn nun der Kupplungsbolzen in die Nicht-Kupplungsstellung überführt werden soll, so bedeutet dies, dass wie groß auch immer die Vertikalkraftkomponente K ist, der Aufwerfhebel 24 zunächst unbehindert um die Aufwerfhebelschwenkachse 26 geschwenkt werden kann, solange, bis die Überhöhung 78 mit ihrer Nockenfläche 78a gegen die Schrägfläche 70d des Sicherungsbolzens 70 anstößt. Bevor aber die Nockenfläche 78a gegen die Schrägfläche 70d anstößt, tritt ein Markierungsnocken 110 des Aufwerfhebels 24 ausser Einwirkung gegenüber einem induktiven oder kapazitiven Taster 112, welcher an dem Kupplungskörper 10 oder einem mit dem Kupplungskörper 10 verbundenen Gehäuse angeordnet ist. Wenn die Kante 114 des Markierungsnockens 110 den Bereich des Tasters 112 verlässt, so sendet dieser Taster 112 über eine Signalleitung 116 ein Signal an das Kraftgerät 102, welches bewirkt, dass die Krafteinwirkung P der Andrückbacken 48 auf die Zugöse 50 aufhört. Damit hört auch die Vertikalkraftkomponente K auf den Kupplungsbolzen 16 auf zu bestehen und damit wird die Verspannung gelöst, die vorher möglicherweise zwischen der Fläche 76ba und der Kante 70c bestanden hat. Dies bedeutet, dass die Nockenfläche 78a bei weiterer Bewegung des Aufwerfhebels 24 in Gegenzeigersinn um die Schwenkachse 26 den Sicherungsbolzen 70 verspannungsfrei zurückschieben kann. Sobald der Sicherungsbolzen 70 aus der Führungsbohrung 17 ausreichend zurückgeschoben ist, kann die Mitnahme- und Haltefläche 24a mit dem Mitnahme- und Haltezapfen 22 in Eingriff treten und den Kupplungsbolzen nach oben in Richtung auf seine Nicht-Kupplungsstellung verschieben, ohne dass der Kupplungsbolzen 16 gegen die Führungen 12 und 14 verspannt ist, da ja die Kraft P gemäss Figur 1 herrührend von dem Kraftgerät 102 aufgehört hat zu existieren.

## Patentansprüche

1. Anhängerkupplung, umfassend einen Kupplungskörper (10), einen in dem Kupplungskörper zwischen einer Kupplungsstellung und einer Nicht-Kupplungsstellung verschiebbar geführten Kupplungsbolzen (16), einen um eine Aufwerfhebelschwenkachse (26) zwischen einer Sicherungsstellung und einer Haltestellung schwenkbar gelagerten Aufwerfhebel (24), welcher in eine Ausnehmung des Kupplungsbolzens (16) eingreift, in einer Sicherungsstellung den Kupplungsbolzen (16) in dessen Kupplungsstellung sichert, bei seinem Übergang von der Sicherungsstellung in eine Haltestellung den Kupplungsbolzen (16) aus der Kupplungsstellung in die Nicht-Kupplungsstellung mitnimmt und in der Haltestellung den Kupplungsbolzen (16) in der Nicht-Kupplungsstellung hält, einen zusätzlichen, senkrecht zur Achse des Kupplungsbolzens (16) vorzugsweise annähernd in Richtung der Aufwerfhebelschwenkachse (26) verschiebbaren Sicherungsbolzen (70), welcher in einer Sicherungsstellung einer aufwärts gerichteten Anschlagfläche (76ba) des Kupplungsbolzens gegenübersteht und den Kupplungsbolzen (16) in seiner Kupplungsstellung sichert und einen Ausrücknocken (78) zum Ausrücken des zusätzlichen Sicherungsbolzens aus seiner Sicherungsstellung, welcher Ausrücknocken (78) mit dem Aufwerfhebel (24) zur gemeinsamen Drehung verbunden ist und den zusätzlichen Sicherungsbolzen (70) wenigstens teilweise aus seiner Sicherungsstellung drückt, bevor der durch den Aufwerfhebel (24) in Richtung auf die Nicht-Kupplungsstellung mitgenommene Kupplungsbolzen (16) mit dem Sicherungsbolzen (70) diesen gegebenenfalls noch weiter zurückdrängend in Eingriff tritt, wobei der Aufwerfhebel (24) bei seinem Übergang von der Sicherungsstellung in Richtung Haltestellung einen die Sicherungsfunktion des Aufwerfhebels aufhebenden endlichen Weg durchläuft, bevor er in Mitnahmeeingriff mit dem Kupplungsbolzen (16) tritt,
dadurch gekennzeichnet,
dass bei Vorhandensein einer Spielunterdrückungsvorrichtung (102, 48), welche auf die jeweils von dem Kupplungsbolzen (16) durchsetzte Zugöse (50) das Spiel zwischen Kupplungsbolzen (16) und Zugöse (50) wenigstens teilweise unterdrückend einwirkt, diese Spielunterdrückungsvorrichtung durch die Bewegung des Aufwerfhebels (24) oder eines gemeinsam mit dem Aufwerfhebel (24) bewegbaren Teils (110) auslösbar ist, bevor der Aufwerfhebel (24) in Mitnahmeeingriff mit dem Kupplungsbolzen (16) tritt und vorzugsweise auch bevor der Ausrücknocken (78) in Ausrückeingriff mit dem zusätzlichen Sicherungsbolzen (70) tritt, und dass in der durch den Aufwerfhebel (24) und durch den Sicherungsbolzen (70) gesicherten Kupplungsstellung des Kupplungsbolzens (16) dieser Kupplungsbolzen bei Einleitung einer Vertikalschiebekraft in Richtung Nicht-Kupplungsstellung vorab an den Sicherungsbolzen 70 anschlägt, bevor er an dem Aufwerfhebel (24) anschlagen könnte.

2. Anhängerkupplung nach Anspruch 1,
dadurch gekennzeichnet,
dass die Steuerung für die Spielunterdrückungsvorrichtung einen Taster (112) umfasst, welcher die Schwenkstellung des Aufwerfhebels (24) um die Aufwerfhebelschwenkachse (26) erfasst.

3. Anhängerkupplung nach Anspruch 2,
dadurch gekennzeichnet,
dass der Taster (112) ein induktiver oder kapazitiver Taster ist, welcher einer Markierung (114) des Aufwerfhebels (24) gegenübersteht.

4. Anhängerkupplung nach Anspruch 3,
dadurch gekennzeichnet,
dass die Markierung (114) von einem Nocken (110) des Aufwerfhebels (24) gebildet ist.

5. Anhängerkupplung nach einem der Ansprüche 1 bis 4,
dadurch gekennzeichnet,
dass die Spielunterdrückungsvorrichtung (102, 48) ein Spielunterdrückungsprisma (48) umfasst, welches gegen eine in Fahrtrichtung weisende Endfläche (104) der Zugöse anpressbar ist und dass dieses Prisma (48) durch eine fluidendruckbetätigte Andrückvorrichtung (102) beaufschlagt ist.

## Claims

1. Trailer coupling, comprising a coupling body (10), a coupling bolt (16) guided to slide in the coupling body between a coupling position and a non-coupling position, a locking lever (24) mounted to tilt about a locking lever swivel axis (26) between a locking position and a retaining position, which lever (24) engages in a recess in the coupling bolt (16), in a locking position locks the coupling bolt (16) in its coupling position, at the time of its transfer from the locking position into a retaining position entrains the coupling bolt (16) from the coupling position into the non-coupling position and in the retaining position keeps the coupling bolt (16) in the non-coupling position, an additional locking bolt (70) able to slide at right angles to the axis of the coupling bolt (16) preferably approximately in the direction of the locking lever swivel axis (26), which bolt, in a locking position, is opposite an upwardly directed abutment surface (76ba) of the coupling bolt and locks the coupling bolt (16) in its coupling position and a disengaging cam (78) for disengaging the additional locking bolt from its locking position, which disengaging cam (78) is connected to the locking lever (24) for common rotation and pushes the additional locking bolt (70) at least partly out of its locking position, before the coupling bolt (16) entrained by the locking lever (24) in the direction of the non-coupling position comes into engagement with the locking bolt (70), possibly pushing the latter back still further, whereby the locking lever (24), upon its transfer from the locking position in the direction of the retaining position, traverses a final distance cancelling the locking function of the locking lever, before it comes into entraining engagement with the coupling bolt (16), characterised in that in the presence of a device (102, 48) for suppressing play, which acts on the traction eye (50) respectively penetrated by the coupling bolt (16), in a manner suppressing the play between the coupling bolt (16) and traction eye (50) at least partly, this device for suppressing play can be released by the movement of the locking lever (24) or a part (110) able to move jointly with the locking lever (24), before the locking lever (24) comes into entraining engagement with the coupling bolt (16) and preferably also before the disengagement cam (78) comes into disengaging engagement with the additional locking bolt (70), and that in the coupling position of the coupling bolt (16) locked by the locking lever (24) and by the locking bolt (70), upon the introduction of a vertical pushing force in the direction of the non-coupling position, this coupling bolt previously abuts against the locking bolt (70), before it could abut against the locking lever (24).

2. Trailer coupling according to Claim 1, characterised in that the control arrangement for the device for suppressing play comprises a sensor (112), which monitors the swivelling position of the locking lever (24) about the locking lever swivel axis (26).

3. Trailer coupling according to Claim 2, characterised in that the sensor (112) is an inductive or capacitive sensor, which is located opposite a marking (114) of the locking lever (24).

4. Trailer coupling according to Claim 3, characterised in that the marking (114) is formed by a cam (110) of the locking lever (24).

5. Trailer coupling according to one of Claims 1 to 4, characterised in that the device (102, 48) for suppressing play comprises a prism (48) for suppressing play, which can be pressed against an end face (104) of the traction eye pointing in the direction of travel and that this prism (48) is acted upon by a pressing device (102) actuated by fluid pressure.

## Revendications

1. Attelage de remorque, comprenant un corps d'attelage (10), une broche d'attelage (16) pouvant coulisser, dans le corps d'attelage, entre une position d'attelage et une position de non-attelage, un levier de verrouillage (24) monté pivotant, autour d'un axe de pivotement (26) du levier de verrouillage, entre une position de blocage et une position de maintien, qui s'engage dans un évidement de la broche d'attelage (16), qui, dans une position de blocage, bloque la broche d'attelage (16) dans sa position d'attelage, qui, lors de son passage de la position de blocage à une position de maintien, entraîne la broche d'attelage (16) hors de la position d'attelage dans la position de non-attelage et qui, dans la position de maintien, maintient la broche d'attelage (16) en position de non-attelage, une goupille de blocage (70) supplémentaire, perpendiculaire à l'axe de la broche d'attelage (16), pouvant coulisser de préférence approximativement dans la direction de l'axe de pivotement (26) du levier de verrouillage, qui, dans une position de blocage, se situe en regard d'une surface de butée (76ba) de la broche d'attelage orientée vers le haut et bloque la broche d'attelage (16) dans sa position d'attelage, et une came de débrayage (78) servant à débrayer la goupille de blocage supplémentaire hors de sa position de blocage, cette came de débrayage (78) étant liée au levier de verrouillage (24) pour une rotation commune et poussant, au moins partiellement, la goupille de blocage (70) supplémentaire hors de sa position de blocage, avant que la broche d'attelage (16), entraînée par le levier de verrouillage (24) en direction de la position de non-attelage, s'engage avec la goupille de blocage (70) en repoussant éventuellement celle-ci encore plus loin, le levier de verrouillage (24) , lors de son passage de la position de blocage en direction de la position de maintien, parcourant une course finale annulant la fonction de blocage du levier de verrouillage, avant de venir en liaison d'entraînement avec la broche d'attelage (16), **caractérisé en ce que,** lorsqu'existe un dispositif de suppression de jeu (102, 48), qui agit sur l'anneau de traction (50) traversé respectivement par la broche d'attelage (16) en supprimant, au moins partiellement, le jeu entre la broche d'attelage (16) et l'anneau de traction (50), ce dispositif de suppression de jeu peut être déclenché par le mouvement du levier de verrouillage (24) ou d'une partie (110) qui est mobile avec le levier de verrouillage (24), avant que le levier de verrouillage (24) entre en liaison d'entraînement avec la broche d'attelage (16) et, de préférence, également avant que la came de débrayage (78) entre en liaison de débrayage avec la goupille de blocage (70) supplémentaire, et en ce que, lorsque la broche d'attelage (16) est en position d'attelage bloquée par le levier de verrouillage (24) et par la goupille de blocage (70), cette broche d'attelage, lors de l'amorçage d'une force de poussée verticale en direction de la position de non-attelage, vient buter préalablement sur la goupille de blocage (70) avant de pouvoir buter sur le levier de verrouillage (24).

2. Attelage de remorque selon la revendication 1, caractérisé en ce que le système de commande du dispositif de suppression de jeu comprend un capteur (112) détectant la position de pivotement du levier de verrouillage (24) autour de l'axe de pivotement (26) du levier de verrouillage.

3. Attelage de remorque selon la revendication 2, caractérisé en ce que le capteur (112) est un capteur inductif ou capacitif, situé en regard d'un marquage (114) du levier de verrouillage (24).

4. Attelage de remorque selon la revendication 3, caractérisé en ce que le marquage (114) est formé par un bec (110) du levier de verrouillage (24).

5. Attélage de remorque selon l'une des revendications 1 à 4, caractérisé en ce que le dispositif de suppression de jeu (102, 48) comprend un prisme de suppression de jeu (48) pouvant être pressé contre une face terminale (104) de l'anneau de traction orientée dans la direction de la marche en avant, et en ce que ce prisme (48) peut être actionné par un dispositif de pression (102) dont la pression est fournie par un fluide.
